# EUROPEAN PATENT SPECIFICATION

(11) **EP 2 385 777 B1**
(45) Date of publication and mention of the grant of the patent: **31.07.2013**
(21) Application number: 09771632.8
(22) Date of filing: 08.12.2009
(51) Int. Cl.: A47J 31/36

(54) **METHOD AND SYSTEM FOR MAKING AN ESPRESSO BEVERAGE**
VERFAHREN UND SYSTEM ZUR ZUBEREITUNG EINES ESPRESSOGETRÄNKS
PROCÉDÉ ET SYSTÈME POUR PRÉPARER UNE BOISSON EXPRESSO

(30) Priority: 06.01.2009 US 349456
(43) Date of publication of application: 16.11.2011
(73) Proprietor: Starbucks Corporation D/b/a Starbucks Coffee Company, Seattle, WA 98134-1435 (US)
(72) Inventor: CAMERA, Paul, Seattle, WA 98134 (US)
(74) Representative: Grünecker, Kinkeldey, Stockmair & Schwanhäusser
(86) International application number: PCT/US2009/067216
(87) International publication number: WO 2010/080303

(56) References cited:
- EP-A2- 1 810 599
- WO-A2-03/038770

## Description

### FIELD

The present disclosure generally relates to a method and system for preparing an espresso shot involving efficient compression which maximizes extraction and improves taste.

### BACKGROUND

Espresso is a coffee beverage brewed by forcing steam or hot water through ground coffee. Espresso is typically of thicker consistency than drip coffee, having a higher amount of dissolved solids than drip coffee per relative volume, and a serving size that is usually measured in shots. The typical commercial automated espresso machine is designed to brew a double shot (about 12 grams to about 18 grams of ground coffee brewed with about 1.5 ounces (∼44 ml) to about 4.0 ounces (418 ml) of water) of espresso as this is the predominant product required from the machine. When producing a double shot of espresso using such an espresso machine, 12 to 18 grams of ground coffee are subjected to a pressurized force which transforms the ground coffee into a firm puck. Water is then forced through the puck of ground coffee at a high temperature and a high pressure to form the espresso. An example of an espresso machine is described in EP 1810599.

Given that the typical automated espresso machine is designed to produce double shots of espresso, a single shot of espresso (about 6 grams to about 9 grams of ground coffee brewed with about 0.75 ounces (∼22 ml) to about 2.0 ounces (∼59 ml) of water) is often produced by preparing a double shot of espresso and discarding half of the resultant espresso, which creates waste and increases costs. Thus, it is difficult to provide a consistent and equal flavor profile for the espresso produced by an espresso machine for both single and double shots.

Because espresso coffee production involves a high pressure extraction process, shot production in a typical automated espresso machine requires the ground coffee to be highly compressed or "tamped" to provide adequate resistance to the water flow. Conventional espresso equipment has a fixed tamp where the process of extraction in sequential order is: (A) to provide a high pressure tamp; (B) optionally pre-infuse the coffee grounds with water; (C) optionally rest to allow the coffee grounds to absorb the water and allow the coffee to condition (absorb heat and become susceptible to efficient extraction); and (D) pump hot water at high pressure through the coffee grounds. However, this may not allow sufficiently efficient conditioning of the coffee grounds before extraction to prepare a single shot of espresso with the same flavor profile as a double shot of espresso. In fact, the above process, when used to make a single shot of espresso can in some cases create an isolated extraction portion of the coffee grounds that has a bitter or "processed" flavor.

### SUMMARY

Some embodiments relate to a method of preparing espresso as defined in claim 1, comprising:

providing ground coffee to a brew chamber of an espresso machine; performing a first compression of the ground coffee with a pressure from about 10 kg to about 60 kg; performing a second compression of the ground coffee with a pressure from about 60 kg to about 500 kg; and forcing heated and pressurized water through the ground coffee, thereby extracting espresso.

In some embodiments, performing a first compression of the ground coffee comprises compressing the ground coffee with a pressure from about 15 kg to about 55 kg.

In some embodiments, performing a first compression of the ground coffee comprises compressing the ground coffee with a pressure from about 20 kg to about 40 kg.

In some embodiments, performing a first compression of the ground coffee comprises compressing the ground coffee with a pressure from about 30 kg to about 33 kg.

In some embodiments, performing a first compression of the ground coffee comprises compressing the ground coffee with a pressure of about 31 kg.

Some embodiments further comprise allowing the ground coffee to rest.

Some embodiments further comprise infusing the ground coffee with water.

Some embodiments further comprise infusing the ground coffee with water before allowing the ground coffee to rest.

In some embodiments, the ground coffee with water is performed for about 1000 milliseconds.

In some embodiments, infusing the ground coffee with water is performed for about 1000 milliseconds.

In some embodiments, allowing the ground coffee to rest is performed for about 2000 milliseconds.

In some embodiments, the ground coffee comprises about 6 grams to about 12 grams of ground coffee.

In some embodiments, the ground coffee comprises about 8 grams to about 10 grams of ground coffee.

In some embodiments, the pressurized water is pressurized to a pressure of about 8 bar to about 10 bar.

Some embodiments relate to a computer-implemented method of preparing an espresso-containing beverage from ground coffee with an automated espresso machine as defined in claim 2, the computer-implemented method comprising: causing a first compression of the ground coffee with a pressure of from about 10 kg to about 60 kg; causing a second compression of the ground coffee with a pressure of from about 60 kg to about 500 kg; and causing heated and pressurized water to be forced through the ground coffee, thereby extracting espresso..

In some embodiments, causing the first compression of the ground coffee comprises causing compression of the ground coffee with a pressure from about 15 kg to about 55 kg.

In some embodiments, causing the first compression of the ground coffee comprises causing compression of the ground coffee with a pressure from about 20 kg to about 40 kg.

In some embodiments, causing the first compression of the ground coffee comprises causing compression of the ground coffee with a pressure from about 30 kg to about 33 kg.

In some embodiments, causing the first compression of the ground coffee comprises causing compression of the ground coffee with a pressure of about 31 kg.

Some embodiments further comprise causing the ground coffee to rest.

Some embodiments further comprise causing infusion of the ground coffee with water.

Some embodiments further comprise causing infusion of the ground coffee with water before causing the ground coffee to rest.

In some embodiments, infusion of the ground coffee with water is performed for about 1000 milliseconds.

In some embodiments, infusion of the ground coffee with water is performed for about 1000 milliseconds.

In some embodiments, the ground coffee rests for about 2000 milliseconds.

In some embodiments, the ground coffee comprises about 6 grams to about 12 grams of ground coffee.

In some embodiments, the ground coffee comprises about 8 grams to about 10 grams of ground coffee.

In some embodiments, the pressurized water is pressurized to a pressure of about 8 bar to about 10 bar.

Some embodiments relate to an apparatus for preparing an espresso-containing beverage from ground coffee not being part of the claimed invention, comprising: a tamper for performing a first compression of the ground coffee; a tamper for performing a second compression of the ground coffee; and wherein the first compression is at a pressure of from about 10 kg to about 60 kg and the second compression is at a pressure of from about 60 kg to about 500 kg.

In some embodiments, the tamper for performing a first compression of the ground coffee compresses the ground coffee with a pressure from about 15 kg to about 55 kg.

In some embodiments, the tamper for performing a first compression of the ground coffee compresses the ground coffee with a pressure from about 20 kg to about 40 kg.

In some embodiments, the tamper for performing a first compression of the ground coffee compresses the ground coffee with a pressure from about 30 kg to about 33 kg.

In some embodiments, the tamper for performing a first compression of the ground coffee compresses the ground coffee with a pressure of about 31 kg.

In some embodiments, the ground coffee is allowed to rest between the first compression and the second compression.

In some embodiments, the ground coffee is infused with water between the first compression and the second compression.

In some embodiments, the ground coffee is infused with water before the ground coffee is allowed to rest.

In some embodiments, the ground coffee is infused with water for about 1000 milliseconds.

In some embodiments, the ground coffee is infused with water for about 1000 milliseconds.

In some embodiments, the ground coffee is allowed to rest for about 2000 milliseconds.

In some embodiments, the ground coffee comprises about 6 grams to about 12 grams of ground coffee.

In some embodiments, the ground coffee comprises about 8 grams to about 10 grams of ground coffee.

Some embodiments further comprise an element for forcing pressurized and heated water through the ground coffee wherein the pressurized and heated water is pressurized to a pressure of about 8 bar to about 10 bar.

Some embodiments relate to an automated espresso machine as defined in claim 12 comprising a brew chamber, at least one tamper, a processor and a memory, wherein the processor executes instructions stored in the memory that controls operation of the at least one tamper and the brew chamber to: perform a first compression of ground coffee with a pressure of from about 10 kg to about 60 kg; perform a second compression of the ground coffee with a pressure of from about 60 kg to about 500 kg; and force heated and pressurized water through the ground coffee, thereby extracting espresso.

In some embodiments, the first compression of the ground coffee is at a pressure from about 15 kg to about 55 kg.

In some embodiments, the first compression of the ground coffee is at a pressure from about 20 kg to about 40 kg.

In some embodiments, the first compression of the ground coffee compresses the ground coffee with a pressure from about 30 kg to about 33 kg.

In some embodiments, the first compression of the ground coffee is at a pressure of about 31 kg.

In some embodiments, the ground coffee is allowed to rest between the first compression and the second compression.

In some embodiments, the ground coffee is infused with water between the first compression and the second compression.

In some embodiments, the ground coffee is infused with water before the ground coffee is allowed to rest.

In some embodiments, the ground coffee is infused with water for about 1000 milliseconds.

In some embodiments, the ground coffee is infused with water for about 1000 milliseconds.

In some embodiments, the ground coffee is allowed to rest for about 2000 milliseconds.

In some embodiments, the ground coffee comprises about 6 grams to about 12 grams of ground coffee.

In some embodiments, the ground coffee comprises about 8 grams to about 10 grams of ground coffee.

In some embodiments, the pressurized water is pressurized to a pressure of from about 8 bar to about 10 bar.

Some embodiments relate to an automated espresso machine as defined in claim 16 comprising at least one tamper, a processor and a memory, the improvement comprising: instructions stored in the memory which, when executed by the processor, cause: at least one tamper to apply a first compression of ground coffee with a pressure of from about 10 kg to about 60 kg; and at least one tamper to apply a second compression of the ground coffee with a pressure of from about 60 kg to about 500 kg.

Some embodiments further comprise an element for forcing water through the ground coffee wherein the pressurized water is pressurized to a pressure of from about 8 bar to about 10 bar.

### BRIEF DESCRIPTION OF THE DRAWINGS

**FIG. 1** is a process flow diagram depicting an overview of an illustrative process described in the embodiments of the disclosure.

**FIG. 2** is a diagram of an illustrative embodiment of an automated espresso machine.

**FIG. 3** is a diagram of another illustrative embodiment of an automated espresso machine.

**FIG. 4** is a schematic drawing of one embodiment of a system for preparing espresso with an automated espresso machine.

### DETAILED DESCRIPTION

The following discussion is presented to enable a person skilled in the art to make and use one or more of the present embodiments. The general principles described herein may be applied to embodiments and applications other than those detailed below without departing from the spirit and scope of the disclosure. Therefore the present embodiments are not intended to be limited to the particular embodiments shown, but are to be accorded the widest scope consistent with the principles and features disclosed or suggested herein.

Some embodiments relate to an automated espresso machine and a method carried out by the espresso machine which is capable of producing both a double shot and single shot of espresso with a consistent flavor profile. Flavor of the espresso products can be qualitatively evaluated on a blind basis by an expert panel trained in coffee qualitative descriptive analysis. Such espresso subject matter experts make qualitative comparisons between established coffee standards and the product of interest. Examples of flavor attributes detected by members of the expert panel include sweetness, caramel-like flavor and creamy body.

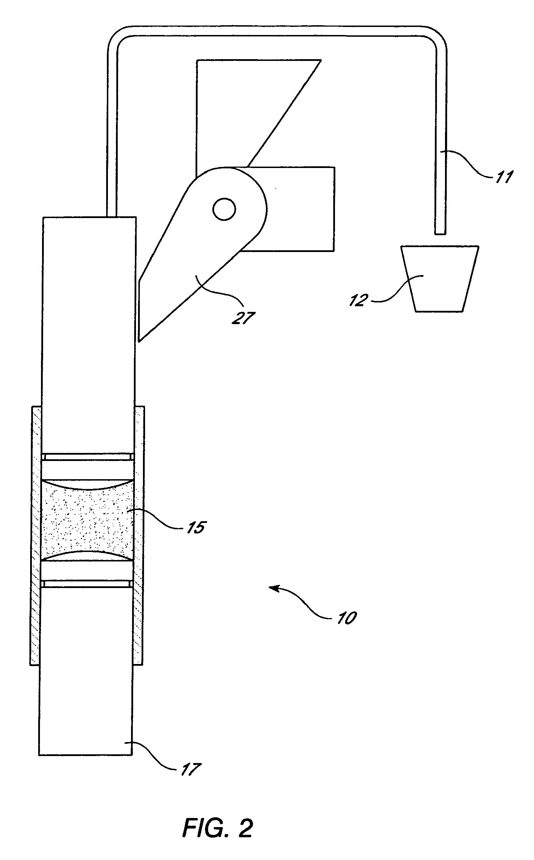

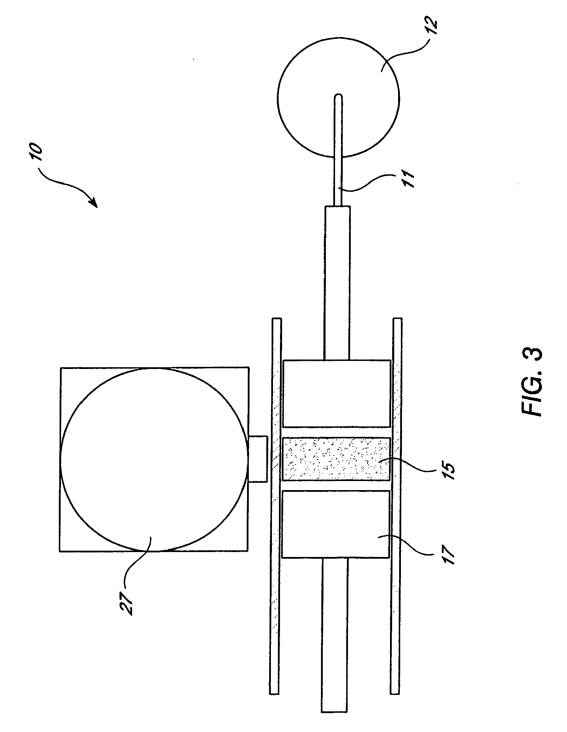

Referring to Figs. 2 and 3, some embodiments relate to an automated espresso machine 10 which can carry out the processes involved in preparing espresso with minimal input from a human operator. An example of an automated espresso machine 10 includes a brewing chamber 15 into which a measured charge of ground coffee is placed by gravity feed from a grinder assembly which receives its measure of roasted beans from a device 27. In some embodiments, the brew chamber is horizontal. In other embodiments, the brew chamber can be vertical or oblique, for example. However, the present embodiments are not so limited. Also, the brew chamber may be of any shape or size. In some embodiments the brew chamber is cylindrical with a diameter from about 10 mm to about 100 mm, however, the present embodiments are not so limited. It should be noted that changes in the brew chamber shape and size can effect the tamper movements and compressions used in the methods described herein.

In some embodiments, the automated espresso machine further includes a tamper 17 which compresses the coffee grounds in the brewing chamber 15 to a predetermined degree. The tamper may be fixed or variable and may move linearly, for example. However, the present embodiments are not so limited. In some embodiments, the tamper is a piston. After the ground coffee is compressed with a predetermined force (a "tamp"), hot brewing water (from about 85 °C to about 96 °C) is supplied at a pressure of from about 8 bar to about 10 bar from a water heater vessel. In some embodiments, the automated espresso machine also comprises a screen in the brew chamber 15 which prevents unextracted coffee grounds from entering a dispensing nozzle 11. The screen may have various hole shapes, such as circular, triangular, square or rectangular; however, the present embodiments are not so limited. The screen may also have a variety of hole sizes and hole spacings. In one embodiment the screen may have triangular holes which are from about 0.1 mm to about 1.0 mm in size with spacing between about 0.5 and about 2.0 mm.

In some embodiments, the hot brewing water is carried to the interior of the brewing chamber 15 and into the coffee puck. The hot brewing water can be liquid water or steam. The temperature of the water can be, for example, from about 85 °C to about 96 °C. At the end of the brewing phase, the tamper 17 can be driven upwardly to eject the spent coffee grounds puck into a waste receptacle. The automated espresso machine may operate a cleaning cycle during which the brewing chamber 15, tamper 17 and dispensing lines and nozzle 11 are flushed with a charge of hot water. It may be noted that such a cleaning cycle may be configured, for example, at operator discretion.

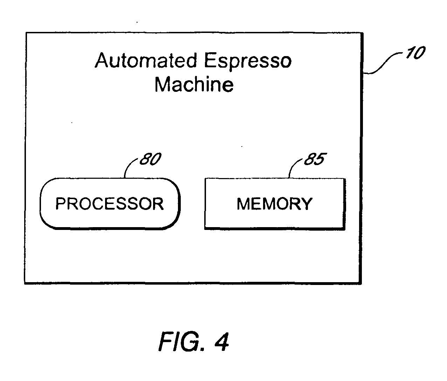

As shown in Figure 4, the above described components of the automated espresso machine 10 may be controlled by a microprocessor 80 executing instructions stored in a memory 85. Accordingly, the process(es) performed by the automated espresso machine 10 to prepare espresso with minimal input from a human operator as described herein may be considered computer-implemented. Moreover, in some embodiments, the process(es) performed by the automated espresso machine 10 are configurable by an operator via a user interface (not shown) also controlled by the microprocessor 80.

Coffee and other products subjected to processing such as that necessary to prepare espresso or similar beverages, go through flavor and aroma changes as a result of processing conditions. These changes come from the altering of the initial bonded structures of the compounds within the ingredients used to make the beverage. With coffee, any kind of processing can alter the bonded structures of the compounds found in unprocessed coffee beans. Therefore, subtle changes in processing can have significant effects on the taste, aroma and/or flavor of the resulting product. In some embodiments, coffee products other than espresso can be used in the methods described herein. Additionally, other beverages can be prepared by the described methods such as tea or juices, for example.

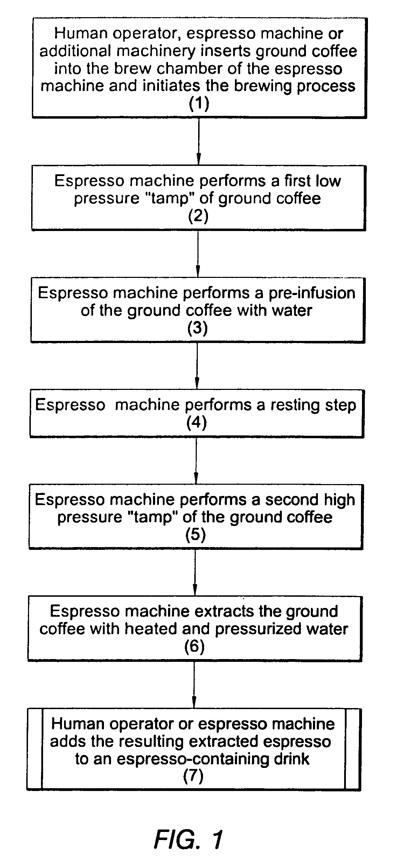

Some embodiments of the present disclosure are directed to systems in which an espresso-containing beverage is prepared using an initial compression which is at a lower pressure of from about 10 kg to about 60 kg, followed by second compression which is at a higher pressure of from about 60 kg to about 500 kg. Referring to Figs. 1-3, in accordance with an illustrative embodiment, (1) a human operator, an espresso machine or additional machinery inserts ground coffee into the brew chamber 15 of an espresso machine 10 and initiates the brewing process. In another embodiment, such a process may be further automated or connected to a timer, for example. In such an embodiment, the timer could be used to delay the initiation of the processes. Next, (2) the automated espresso machine 10 performs a first low pressure "tamp" of the ground coffee with the tamper 17 forming the coffee puck. Subsequently, (3) the espresso machine 10 performs a pre-infusion of the ground coffee with water. Then, (4), a resting phase is carried out by the espresso machine 10 from 100 to 500 milliseconds. The resting phase allows for the ground coffee to absorb water and and become more homogenized. In the following (5), the espresso machine 10 performs a second high pressure "tamp" of the ground coffee with the tamper 17, further forming the coffee puck. At this point (6) the espresso machine 10 forces heated and pressurized water (from about 8 bar to about 10 bar) through the ground coffee puck, thereby extracting the espresso from the coffee puck. Finally, (7) the human operator either prepares the espresso as a standalone beverage or adds the espresso to an espresso-containing beverage.

In some embodiments, a single shot of espresso can be prepared more efficiently without the waste involved with preparing a double shot and discarding half of it. By initially having a light compression in the brew chamber 15, the ground coffee is able to accept more water during the pre-infusion step. In some embodiments, a rest phase follows where no additional water is pumped into the coffee. This allows the coffee to condition, soak up hot water, expand and begin to heat up the compounds to be extracted. Because of the initial low pressure tamp, the ground coffee is able to condition, soak up water, expand and heat up to a much greater extent than if the coffee was only highly compressed. In some embodiments, following the pre-infusion and rest phase, there is a second compression or tamp in the brew chamber 15. This second compression forms a more dense coffee puck than the first compression forms, suitable for the extraction process wherein heated and pressurized water is forced through the coffee puck to extract the espresso. In some embodiments, this process is used to prepare a single shot of espresso. In other embodiments, this process is used to prepare a double shot of espresso.

Because of the first low pressure tamp before the pre-infusion and rest step, the ground coffee in the brew chamber 15 is able to expand and soften, making it better conditioned for extraction. In addition, liquid is present in the ground coffee as a lubricant which also makes the extraction of the espresso more effective. Therefore, the use of more than one compression allows the ground coffee to be compressed and the espresso to be extracted more efficiently. Whereas there is no desire to be bound by any specific theory of mechanism, it is believed that the compressed "puck" of ground coffee after the initial low pressure compression is a more homogeneous mass. Accordingly, water infused through the puck travels more evenly and in an isokinetic fashion, contributing to a more even extraction of espresso from the ground coffee. This maximizes the extraction of espresso from the limited amount of coffee for the single shot without creating an isolated extraction portion of the coffee with a bitter or processed flavor.

Referring to Fig. 2, some embodiments of the present disclosure relate to a method of preparing an espresso-containing beverage 12 using an initial compression with the tamper 17 in the brew chamber 15 of an espresso machine 10 which is at a lower pressure, followed by second compression in the brew chamber 15 which is at a higher pressure. Some embodiments relate to a method of preparing an espresso-containing beverage 12 implemented by the processor 80 executing instructions stored in memory 85 that cause the automated espresso machine 10 to perform an initial compression at a low pressure, followed by second compression which is at a higher pressure. Still other embodiments relate to a system for preparing an espresso-containing beverage 12 which performs an initial compression at low pressure followed by a second compression at a higher pressure.

In some embodiments, the method of preparing an espresso-containing beverage involves applying a first compression to the ground coffee, pre-infusing the ground coffee with water, allowing the ground coffee to rest, applying a second compression of the ground coffee that is at a higher pressure than the first compression and extracting the ground coffee with pressurized water. In one embodiment, the first compression is performed at from about 10 to about 60 kg. In another embodiment, the first compression is performed at from about 15 to about 55 kg. In yet another embodiment, the first compression is performed at from about 20 to about 50 kg. In still another embodiment, the first compression is performed at from about 25 to about 40 kg. In still another embodiment, the first compression is performed at from about 30 to about 33 kg. In still another embodiment, the first compression is performed at about 31 kg.

In one embodiment, the second compression is performed at from about 60 kg to about 1000 kg. In another embodiment, the second compression is performed at from about 70 kg to about 500 kg. In yet another embodiment, the second compression is performed at from about 100 kg to about 500 kg. In still another embodiment, the second compression is performed at from about 150 kg to about 250 kg.

Referring to Figs. 2-4, in some embodiments, the automated espresso machine is equipped with a processor 80 and memory 85 for storing instructions. The instructions, when executed by the processor, cause the tamper 17 in the brewing chamber of the espresso machine to apply a first compression (or tamp) of the ground coffee with a pressure from about 10 kg to about 60 kg, then provide hot water to the brew chamber 15 to infuse the ground coffee with water, and then cause the tamper 17 to apply a second compression (or tamp) of the ground coffee, which second compression is at a higher pressure than the first compression, and then force heated and pressurized water through the ground coffee, thereby extracting the espresso.

The following examples are provided for illustrative purposes only, and are in no way intended to limit the scope of the present embodiments.

### EXAMPLE 1

In one example, an espresso-containing beverage is prepared under the following conditions. Referring to Fig. 2, regular ground coffee is placed via a feed device 27 into the brew chamber 15 of an automated espresso machine. In accordance with the instructions stored in memory 85 and executed by the processor 80 of the automated espresso machine 10, a light initial tamp with the tamper compressed the ground coffee into a puck at a force of about 31 kg. Next, a pre-infusion of the ground coffee with water is performed for about 1000 milliseconds. Then, a rest period for conditioning of the ground coffee was performed for about 2000 milliseconds. A secondary tamp with the tamper then compressed the ground coffee puck with a fixed linear tamper 17 movement of 2.5 mm producing the espresso product which is dispensed through the dispensing nozzle 11. This espresso product was then used as a standalone beverage or used to prepare any espresso-containing beverage 12.

In this example, the single shot coffee quantity is about 8 to 10 grams and the brew chamber 15 design had about a 42mm diameter. The screen used in the brew chamber 15 had 0.3 mm holes on a triangular pattern with 12 mm spacing. The water pressure was about 8 to about 10 bar.

### EXAMPLE 2

The same procedure was followed as described above in Example 1 except that decaffeinated ground coffee was placed in the brew chamber 15 of the automated espresso machine and the secondary tamp compressed the decaffeinated ground coffee with a fixed tamper 17 movement of 1.3 mm. The smaller movement of the tamper on the decaffeinated coffee prevents overextraction and a possible "processed flavor." Whereas there is no desire to be bound by any specific theory of mechanism, it is believed that the processing coffee undergoes to become decaffeinated can make it more susceptible to overextraction and therefore less extraction pressure produces a superior result and a flavor profile more consistent with regular coffee.

As used herein the term "coffee" includes and encompasses regular coffee, decaffeinated coffee, ground coffee, whole coffee beans, roasted coffee beans, ground roasted coffee beans, coffee extract, soluble coffee and green coffee.

All of the processes described herein may be embodied in, and fully automated via, software code modules executed by one or more general purpose computers or processors. The code modules may be stored in any type of computer-readable medium or other computer storage device. Some or all the methods may alternatively be embodied in specialized computer hardware. In addition, the components and instructions referred to herein may be implemented in hardware, software, firmware or a combination thereof. In some embodiments, a microprocessor may be included in the methods and systems described in the instant disclosure. Such processors may be, for example, any conventional general purpose single- or multi-chip microprocessor such as a Pentium^{®} processor, a Pentium^{®} Pro processor, a 8051 processor, a MIPS^{®} processor, a Power PC^{®} processor, or an ALPHA^{®} processor. In addition, the microprocessor may be any conventional special purpose microprocessor such as a digital signal processor or a graphics processor. The microprocessor may have address lines, data lines, and one or more control lines.

Conditional language, such as, among others, "can," "could," "might," or "may," unless specifically stated otherwise, or otherwise understood within the context as used, is generally intended to convey that certain embodiments include, while other embodiments do not include, certain features, elements and/or steps. Thus, such conditional language is not generally intended to imply that features, elements and/or steps are in any way required for one or more embodiments or that one or more embodiments necessarily include logic for deciding, with or without user input or prompting, whether these features, elements and/or steps are included or are to be performed in any particular embodiment.

It should be emphasized that many variations and modifications may be made to the above-described embodiments, the elements of which are to be understood as being among other acceptable examples. All such modifications and variations are intended to be included herein within the scope of this disclosure and protected by the following claims.

## Claims

1. A method of preparing espresso comprising:
providing ground coffee to a brew chamber (15) of an espresso machine (10);
performing a first compression of the ground coffee with a pressure from about 10 kg to about 60 kg;
performing a second compression of the ground coffee with a pressure from about 60 kg to about 500 kg; and
forcing heated and pressurized water through the ground coffee, thereby extracting espresso.

2. A computer-implemented method of preparing an espresso-containing beverage from ground coffee with an automated espresso machine (10), the computer-implemented method comprising:
causing a first compression of the ground coffee with a pressure of from about 10 kg to about 60 kg;
causing a second compression of the ground coffee with a pressure of from about 60 kg to about 500 kg; and
causing heated and pressurized water to be forced through the ground coffee, thereby extracting espresso.

3. The method of Claim 1 or 2, wherein the performing a first compression of the ground coffee comprises at least one of compressing the ground coffee with a pressure from about 15 kg to about 55 kg and compressing the ground coffee with a pressure from about 20 kg to about 40 kg.

4. The method of Claim 1 or 2, wherein performing a first compression of the ground coffee comprises compressing the ground coffee with a pressure from about 30 kg to about 33 kg.

5. The method of Claim 1 or 2, wherein performing a first compression of the ground coffee comprises compressing the ground coffee with a pressure of about 31 kg.

6. The method of Claim 1 or 2, further comprising allowing the ground coffee to rest.

7. The method of Claim 7, wherein allowing the ground coffee to rest is performed for about 2000 milliseconds.

8. The method of Claim 1 or 2, further comprising infusing the ground coffee with water.

9. The method of Claim 9, wherein infusing the ground coffee with water is performed for about 1000 milliseconds.

10. The method of Claim 1 or 2, wherein the ground coffee comprises about 6 grams to about 12 grams of ground coffee.

11. The method of Claim 1 or 2, wherein the pressurized water is pressurized to a pressure of about 8 bar to about 10 bar.

12. An automated espresso machine (10) comprising a brew chamber (15), at least one tamper (17), a processor (80) and a memory (85), wherein the processor (80) executes instructions stored in the memory (85) that controls operation of the at least one tamper (17) and the brew chamber (15) to:
perform a first compression of ground coffee with a pressure of from about 10 kg to about 60 kg;
perform a second compression of the ground coffee with a pressure of from about 60 kg to about 500 kg; and
force heated and pressurized water through the ground coffee, thereby extracting espresso.

13. The automated espresso machine of Claim 12, wherein the first compression of the ground coffee is at a pressure from about 20 kg to about 40 kg.

14. The automated espresso machine of Claim 12, wherein the first compression of the ground coffee is at a pressure of about 31 kg.

15. The automated espresso machine of Claim 12, wherein the pressurized water is pressurized to a pressure of from about 8 bar to about 10 bar.

16. An automated espresso machine (10) comprising at least one tamper (17), a processor (80) and a memory (85), **characterized in that** the automated espresso machine comprises:
instructions stored in the memory (85) which, when executed by the processor (80), cause:
at least one tamper (17) to apply a first compression of ground coffee with a pressure of from about 10 kg to about 60 kg; and
at least one tamper (17) to apply a second compression of the ground coffee with a pressure of from about 60 kg to about 500 kg.

17. The automated espresso machine (10) of Claim 16, further comprising an element for forcing water through the ground coffee wherein the pressurized water is pressurized to a pressure of from about 8 bar to about 10 bar.

## Patentansprüche

1. Verfahren zur Zubereitung von Espresso, das umfasst:
Zuführen von gemahlenem Kaffee zu einer Brühkammer (15) einer Espressomaschine (10),
Durchführen einer ersten Kompression des gemahlenen Kaffees mit einem Druck von ungefähr 10 kg bis ungefähr 60 kg,
Durchführen einer zweiten Kompression des gemahlenen Kaffees mit einem Druck von ungefähr 60 kg bis ungefähr 500 kg, und
Drücken von erhitztem und unter Druck gesetztem Wasser durch den gemahlenen Kaffee, um Espresso zu extrahieren.

2. Computer-implementiertes Verfahren zur Zubereitung eines Espresso-haltigen Getränks aus gemahlenem Kaffee mittels einer automatisierten Espressomaschine (10), wobei das Computer-implementierte Verfahren umfasst:
Veranlassen einer ersten Kompression des gemahlenen Kaffees mit einem Druck von ungefähr 10 kg bis ungefähr 60 kg,
Veranlassen einer zweiten Kompression des gemahlenen Kaffees mit einem Druck von ungefähr 60 kg bis ungefähr 500 kg, und
Veranlassen, dass ein erhitztes und unter Druck gesetztes Wasser durch den gemahlenen Kaffee gedrückt wird, um Espresso zu extrahieren.

3. Verfahren nach Anspruch 1 oder 2, wobei das Durchführen einer ersten Kompression des gemahlenen Kaffees das Komprimieren des gemahlenen Kaffees mit einem Druck von ungefähr 15 kg bis ungefähr 55 kg und/oder das Komprimieren des gemahlenen Kaffees mit einem Druck von ungefähr 20 kg bis ungefähr 40 kg umfasst.

4. Verfahren nach Anspruch 1 oder 2, wobei das Durchführen einer ersten Kompression des gemahlenen Kaffees das Komprimieren des gemahlenen Kaffees mit einem Druck von ungefähr 30 kg bis ungefähr 33 kg umfasst.

5. Verfahren nach Anspruch 1 oder 2, wobei das Durchführen einer ersten Kompression des gemahlenen Kaffees das Komprimieren des gemahlenen Kaffees mit einem Druck von ungefähr 31 kg umfasst.

6. Verfahren nach Anspruch 1 oder 2, das weiterhin das Ruhenlassen des gemahlenen Kaffees umfasst.

7. Verfahren nach Anspruch 7, wobei das Ruhenlassen des gemahlenen Kaffees für ungefähr 2000 Millisekunden durchgeführt wird.

8. Verfahren nach Anspruch 1 oder 2, das weiterhin das Aufgießen des gemahlenen Kaffees mit Wasser umfasst.

9. Verfahren nach Anspruch 9, wobei das Aufgießen des gemahlenen Kaffees mit Wasser für ungefähr 1000 Millisekunden durchgeführt wird.

10. Verfahren nach Anspruch 1 oder 2, wobei der gemahlene Kaffee ungefähr 6 Gramm bis ungefähr 12 Gramm gemahlenen Kaffees umfasst.

11. Verfahren nach Anspruch 1 oder 2, wobei das unter Druck gesetzte Wasser unter einen Druck von ungefähr 8 bar bis ungefähr 10 bar gesetzt wird.

12. Automatisierte Espressomaschine (10), die eine Brühkammer (15), wenigstens einen Tamper (17), einen Prozessor (80) und einen Speicher (85) umfasst, wobei der Prozessor (80) in dem Speicher (85) gespeicherte Befehle ausführt, die den Betrieb des wenigstens einen Tampers (17) und der Brühkammer (15) für Folgendes steuern:
Durchführen einer ersten Kompression von gemahlenem Kaffee mit einem Druck von ungefähr 10 kg bis ungefähr 60 kg,
Durchführen einer zweiten Kompression des gemahlenen Kaffees mit einem Druck von ungefähr 60 kg bis ungefähr 500 kg, und
Drücken von erhitztem und unter Druck gesetztem Wasser durch den gemahlenen Kaffee, um Espresso zu extrahieren.

13. Automatisierte Espressomaschine nach Anspruch 12, wobei die erste Kompression des gemahlenen Kaffees mit einem Druck von ungefähr 20 kg bis ungefähr 40 kg erfolgt.

14. Automatisierte Espressomaschine nach Anspruch 12, wobei die erste Kompression des gemahlenen Kaffees mit einem Druck von ungefähr 31 kg erfolgt.

15. Automatisierte Espressomaschine nach Anspruch 12, wobei das unter Druck gesetzte Wasser unter einen Druck von ungefähr 8 bar bis ungefähr 10 bar gesetzt wird.

16. Automatisierte Espressomaschine (10), die wenigstens einen Tamper (17), einen Prozessor (80) und einen Speicher (85) umfasst, **dadurch gekennzeichnet, dass** die automatisierte Espressomaschine umfasst:
Befehle, die in dem Speicher (85) gespeichert sind und bei einer Ausführung durch den Prozessor veranlassen, dass
wenigstens ein Tamper (17) eine erste Kompression von gemahlenem Kaffee mit einem Druck von ungefähr 10 kg bis ungefähr 60 kg ausübt, und
wenigstens ein Tamper (17) eine zweite Kompression des gemahlenen Kaffees mit einem Druck von ungefähr 60 kg bis ungefähr 500 kg ausübt.

17. Automatisierte Espressomaschine (10) nach Anspruch 16, die weiterhin ein Element zum Drücken von Wasser durch den gemahlenen Kaffee umfasst, wobei das unter Druck gesetzte Wasser unter einen Druck von ungefähr 8 bar bis ungefähr 10 bar gesetzt wird.

## Revendications

1. Procédé pour préparer un expresso, consistant à
- disposer du café moulu dans une chambre de percolation (15) d'une machine à expresso (10) ;
- effectuer une première compression du café moulu avec une pression d'environ 10 kg à environ 60 kg ;
- effectuer une seconde compression du café moulu avec une pression d'environ 60 kg à environ 500 kg ; et
- forcer de l'eau chauffée et sous pression à traverser le café moulu, en extrayant ainsi de l'expresso.

2. Procédé mis en oeuvre par ordinateur pour préparer une boisson contenant de l'expresso à partir de café moulu avec une machine à expresso automatique (10), le procédé mis en oeuvre par ordinateur consistant à :
- provoquer une première compression du café moulu avec une pression d'environ 10 kg à environ 60 kg ;
- provoquer une seconde compression du café moulu avec une pression d'environ 60 kg à environ 500 kg ; et
- faire en sorte que de l'eau chauffée et sous pression soit forcée à traverser le café moulu, en extrayant ainsi de l'expresso.

3. Procédé selon les revendications 1 ou 2, pour lequel effectuer une première compression du café moulu comprend au moins une opération parmi une opération de compression du café moulu avec une pression d'environ 15 kg à environ 55 kg et une opération de compression du café moulu avec une pression d'environ 20 kg à environ 40 kg.

4. Procédé selon les revendications 1 ou 2, pour lequel effectuer une première compression du café moulu consiste à compresser le café moulu avec une pression d'environ 30 kg à environ 33 kg.

5. Procédé selon les revendications 1 ou 2, pour lequel effectuer une première compression du café moulu consiste à compresser le café moulu avec une pression d'environ 31 kg.

6. Procédé selon les revendications 1 ou 2, consistant en outre à permettre au café moulu de se reposer.

7. Procédé selon la revendication 7, pour lequel permettre au café moulu de se reposer est effectué pendant environ 2 000 millisecondes.

8. Procédé selon les revendications 1 ou 2, consistant en outre à infuser le café moulu avec de l'eau.

9. Procédé selon la revendication 8, pour lequel infuser le café moulu avec de l'eau est effectué pendant environ 1 000 millisecondes.

10. Procédé selon les revendications 1 ou 2, pour lequel le café moulu consiste en environ 6 grammes à environ 12 grammes de café moulu.

11. Procédé selon les revendications 1 ou 2, pour lequel l'eau sous pression est à une pression d'environ 8 bars à environ 10 bars.

12. Machine à expresso automatique (10) comprenant une chambre de percolation (15), au moins un bourroir (17), un processeur (80) et une mémoire (85), dans laquelle le processeur (80) exécute des instructions stockées dans la mémoire (85) qui commandent le fonctionnement de l'au moins un bourroir (17) et de la chambre de percolation (15) pour :
- effectuer une première compression de café moulu avec une pression d'environ 10 kg à environ 60 kg ;
- effectuer une seconde compression du café moulu avec une pression d'environ 60 kg à environ 500 kg ; et
- forcer de l'eau chauffée et sous pression à traverser le café moulu, en extrayant ainsi de l'expresso.

13. Machine à expresso automatique selon la revendication 12, dans laquelle la première compression du café moulu est effectuée à une pression d'environ 20 kg à environ 40 kg.

14. Machine à expresso automatique selon la revendication 12, dans laquelle la première compression du café moulu est effectuée à une pression d'environ 31 kg.

15. Machine à expresso automatique selon la revendication 12, dans laquelle l'eau sous pression est à une pression d'environ 8 bars à environ 10 bars.

16. Machine à expresso automatique (10) comprenant au moins un bourroir (17), un processeur (80) et une mémoire (85), **caractérisée en ce que** la machine à expresso automatique comprend :
- des instructions stockées dans la mémoire (85) qui, lorsqu'elles sont exécutées par le processeur (80), font en sorte :
- qu'au moins un bourroir (17) applique une première compression de café moulu avec une pression d'environ 10 kg à environ 60 kg ; et
- qu'au moins un bourroir (17) applique une seconde compression du café moulu avec une pression d'environ 60 kg à environ 500 kg.

17. Machine à expresso automatique (10) selon la revendication 16, comprenant en outre un élément pour forcer de l'eau à traverser le café moulu, dans laquelle l'eau sous pression est à une pression d'environ 8 bars à environ 10 bars.
